# EUROPÄISCHE PATENTSCHRIFT

(11) **EP 3 053 699 B1**
(45) Veröffentlichungstag und Bekanntmachung des Hinweises auf die Patenterteilung: **01.08.2018**
(21) Anmeldenummer: 15003621.8
(22) Anmeldetag: 19.12.2015
(51) Int. Cl.: B23K 26/035, B23K 37/02, B23K 9/28, B23K 9/127

(54) **VORRICHTUNG ZUM SCHWEISSEN VON BAUTEILEN**
DEVICE FOR WELDING COMPONENTS
DISPOSITIF DE SOUDAGE DE COMPOSANTS

(30) Priorität: 21.01.2015 DE 102015000734
(43) Veröffentlichungstag der Anmeldung: 10.08.2016
(73) Patentinhaber: AUDI AG, 85045 Ingolstadt (DE)
(72) Erfinder: Denzer, Klaus, DE - 74189 Weinsberg (DE)
(74) Vertreter: Neuhausen, Marc-Alexander

(56) Entgegenhaltungen:
- EP-A1- 0 249 774
- EP-A1- 1 652 614
- EP-A1- 1 762 328
- DD-A1- 207 669
- DD-A1- 276 253

## Beschreibung

Die vorliegende Erfindung betrifft eine Vorrichtung zum Schweißen von Bauteilen gemäß dem Oberbegriff des Patentanspruchs 1. Die Erfindung ist insbesondere beim Schweißen von dünnwandigen Blechteilen anwendbar, zum Beispiel von Karosserieblechen von Kraftfahrzeugen.

Insbesondere bei der Fertigung von Kraftfahrzeugen bzw. deren Karosserien erfolgt das stoffschlüssige Fügen der Bauteile bereits mit einem sehr hohen Automatisierungsgrad, wobei dünnwandige Blechteile zum Beispiel nach dem MIG- oder MAG-Schweißverfahren verbunden werden. Zur präzisen Applikation der Schweißnähte an den Bauteilkonturen werden Industrieroboter eingesetzt, an deren Roboterarmen die Schweißbrenner über Aufspanneinrichtungen befestigt sind und die Schweißbrenner gezielt entlang der Bauteilkontur führen und den Schweißvorgang steuern.

Beispielsweise aus der DE 101 32 117 C1 oder der DE 10 2004 026 488 A1 ist es dazu bekannt, derartige Aufspanneinrichtungen für Schweißbrenner als sogenannte "Abschaltdosen" oder "Crashboxen" begrenzt federnd nachgiebig auszubilden. Zweck dieser Maßnahme ist es, bei einer unbeabsichtigten Kollision des Schweißbrenners mit zu bearbeitenden Bauteilen oder umgebenden Objekten durch die Auslenkung der Aufspanneinrichtung und mittels Sensoren die Roboterbewegung zu stoppen oder gezielt zu beeinflussen. Nach der Kollision sollte die Aufspanneinrichtung wieder präzise in die Ausgangsposition TCP (tool center point) zurückgestellt werden, um Neueinstellungen der Aufspanneinrichtung bzw. des Schweißbrenners zu vermeiden. Aus der EP 0 249 774 A1 ist eine gattungsbildende Vorrichtung zum Schweißen von Bauteilen bekannt. Die Vorrichtung weist einen Kollisionsschutz bestehend aus einem Unterteil und einem Oberteil auf. Ferner sind Federn in entsprechenden Bohrungen des Unterteils angeordnet. Fährt der Brenner gegen ein Hindernis, hebt sich das Unterteil mit dem Brenner entgegen der Kraftwirkung der Federn vom Oberteil ab, so dass sich die Schaltkontakte lösen, was zur Unterbrechung der Maschinenbewegung führt.

Die Aufgabe der Erfindung besteht darin, eine Vorrichtung bereitzustellen, mittels der unter Ausgleich gegebenenfalls ungünstig zusammentreffender Fertigungs- und/oder Bauteiltoleranzen präzise Schweißverbindungen herstellbar sind.

Die Aufgabe ist durch die Merkmale des Patentanspruches 1 gelöst. Vorteilhafte und besonders zweckmäßige Weiterbildungen der Erfindung sind Gegenstand der Unteransprüche.

Erfindungsgemäß wird vorgeschlagen, dass der Schweißbrenner begrenzt federnd nachgiebig in der Aufspanneinrichtung gehalten und mit einem Führungsmittel versehen ist, das beim Schweißvorgang an der Bauteilkontur anliegt und den Schweißbrenner in einer definierten Position zum Bauteil führt. Mit dem erfindungsgemäßen Vorschlag wird in Verbindung mit einer zusätzlichen Führungseinrichtung am Schweißbrenner weitgehendst sichergestellt, dass bei geringen Maßabweichungen - diese können in Aufspannungstoleranzen und/oder Bauteiltoleranzen begründet sein - unter Abtastung der Bauteilkonturen eine über die programmierte Führung des Schweißbrenners hinausgehende Zuordnung der Schweißnaht zu den Bauteilen erfolgt. Es kann vermieden werden, dass zum Beispiel durch eine Maßabweichung an den Bauteilen die Schweißnaht geringfügig deplaziert ist und nicht die konstruktiv festgelegte Festigkeit erreicht. Es versteht sich, dass hier Maßabweichungen im mm-Bereich und darunter relevant sind. Gegebenenfalls kann die erfindungsgemäße Vorrichtung mit den vorstehend beschriebenen "Abschaltdosen" bzw. "Crashboxen" kombiniert oder an deren Stelle angeordnet sein.

In bevorzugter Ausgestaltung der Erfindung kann das Führungsmittel ein am Brennerkopf des Schweißbrenners befestigter Führungsarm sein, an dessen dem Bauteil zugewandtem Ende zumindest eine Rolle und/oder zumindest ein Taster vorgesehen ist. Über die Rolle und/oder den Taster wird der Schweißbrenner bei vorliegenden Maßabweichungen entlang der Bauteilkontur zur Einhaltung eines definierten, insbesondere für Lichtbogenschweißung wichtigen Abstandes und/oder Positionierung zum Bauteil geführt.

Des Weiteren kann in der Aufspanneinrichtung eine von der federnd nachgiebigen Halterung unabhängige Zentriereinrichtung angeordnet sein, die die Aufspanneinrichtung in einer definierten Mittelstellung relativ zum Roboterarm fixiert. Die Zentriereinrichtung stellt eine stabile Brennerhalterung bei zum Beispiel schnellen Roboterarmbewegungen sicher und bildet zudem die Funktion des für die programmierte, präzise Brennerzustellung wichtigen TCP.

Die Zentriereinrichtung kann besonders zweckmäßig durch einen in der Drehachse des Roboterarms liegenden, federbeaufschlagten Stift mit einem kegelförmigen Kopf gebildet sein, der in eine korrespondierende Ausnehmung des federnd nachgiebigen Halteteils der Aufspanneinrichtung einragt. Der Kegelwinkel ist dabei so festzulegen, dass über die gegebenenfalls auftretenden Führungskräfte über den Führungsarm am Schweißbrenner die federnde Nachgiebigkeit sichergestellt ist.

Ferner kann der Stift über eine Spannvorrichtung mit keilförmigen Flächen in seiner die Zentrierung bewirkenden Federvorspannung verstellbar und/oder in der Zentrierstellung blockierbar sein. Letzteres ermöglicht eine Eliminierung der federnden Nachgiebigkeit bei Bauteilen mit nicht nutzbarer bzw. abtastbarer Bauteilkontur.

Erfindungsgemäß weist das federnd nachgiebige Halteteil der Aufspanneinrichtung einen Kreuzschlitten auf, der über vier in einem fest mit dem Roboterarm verbundenen Aufspannflansch angeordnete Federn gehalten ist, wobei die Federn vorzugsweise in zwei vertikal zueinander liegenden Ebenen ausgerichtet sind. Daraus resultiert bei einer fertigungstechnisch günstigen und baulich robusten Konstruktion eine räumlich universale Nachgiebigkeit der Brennerführung in der gesamten Aufspannebene, die zudem abhängig von der gegeneinander wirkenden Federvorspannung selbstzentrierend zu einer Ausgangsposition ist.

Die Federn können bevorzugt Schraubendruckfedern sein, die in entsprechenden Bohrungen des Aufspannflansches angeordnet und mit definierter Vorspannung auf Führungsflächen des dazwischen befindlichen Kreuzschlittens wirken.

Des Weiteren können am Kreuzschlitten Anzeigemittel vorgesehen sein, die den Federweg bzw. die Auslenkung der einzelnen Federn zur Bestimmung der über das Führungsmittel bewirkten Nachführung des Schweißbrenners anzeigen. Die Anzeigen können insbesondere visuell durch eingefärbte Bereiche an den Anzeigemitteln ausgeführt sein, wodurch eine sehr einfache Überwachung beispielsweise der Bauteilqualität während der Bearbeitung gegeben ist.

In einer besonders zweckmäßigen Weiterbildung der Erfindung können in dem Aufspannflansch mit dem Kreuzschlitten gekoppelte Sensoren angeordnet sein, die bei einer unzulässig großen Auslenkung des Schweißbrenners bzw. des federnd nachgiebigen Halteteils der Aufspanneinrichtung in die Robotersteuerung eingreifen bzw. den Schweißvorgang unterbrechen. Dazu kann in dem Aufspannflansch an jeder der vier Federn ein Sensor angeordnet sein, der bei einer zu großen Auslenkung des federnd nachgiebigen Halteteils der Aufspanneinrichtung bzw. des Schweißbrenners die Robotersteuerung entsprechend abbricht. Damit wird in kostengünstiger Weise der über den Führungsarm bewirkten Nachführung des Schweißbrenners abhängig von Fertigungs- und Bauteiltoleranzen die Funktion einer "Abschaltdose" bzw. Crashbox überlagert, wobei das Einsetzen der Abschaltfunktion erst bei größeren Auslenkungen als bei der Nachführung des Schweißbrenners erfolgt.

Ein Ausführungsbeispiel der Erfindung ist mit Bezug auf die anhängende, schematische Zeichnung näher erläutert. Es zeigen:
- Fig. 1: eine Prinzipskizze einer Vorrichtung zum federnd nachgiebigen Aufspannen eines Schweißbrenners an einem Roboterarm eines Industrieroboters, mit einem am Schweißbrenner angeordneten Führungsarm, der an einer Bauteilkontur von zu verschweißenden Bauteilen entlanggeführt den Schweißbrenner zusätzlich positioniert;
- Fig. 2: den Brennerkopf des Schweißbrenners der Vorrichtung nach Fig. 1 mit daran befestigtem Führungsarm, der an einer Kante als Bauteilkontur von zwei zu verschweißenden Metallblechen entlang geführt ist;
- Fig. 3: eine Prinzipskizze des in den Aufspannflansch der Vorrichtung gemäß Fig. 1 integrierten Kreuzschlittens in einer Mittelstellung, der federnd nachgiebig ein den Schweißbrenner aufnehmendes Halteteil trägt; und
- Fig. 4: einen Längsschnitt durch den Aufspannflansch und das Halteteil der Vorrichtung nach Fig. 1 mit Darstellung einer zusätzlichen Zentriereinrichtung über einen Zentrierstift mit kegelförmigen Kopf, der in eine korrespondierende Ausnehmung im Halteteil einragt.

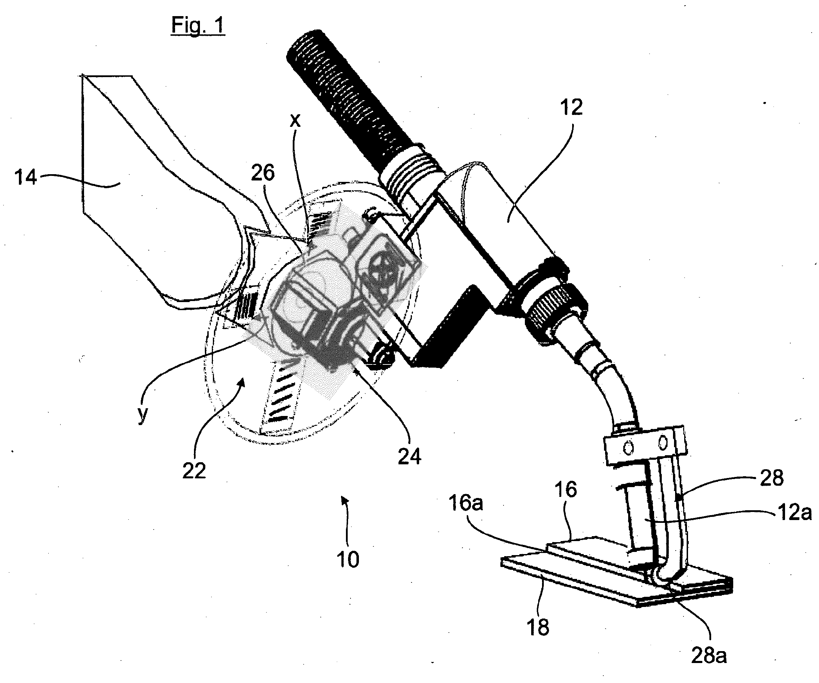

Die Fig. 1 zeigt in einer Prinzipdarstellung die Vorrichtung 10 zur federnd nachgiebigen Aufspannung eines als Schweißbrenner 12 ausgeführten Fügewerkzeugs an einem Roboterarm 14 eines nicht weiter dargestellten Industrieroboters zum automatisierten Schweißen von Bauteilen, insbesondere nach dem bekannten MIG- oder MAG-Schweißverfahren (Lichtbogen-Schutzgas-Schweißen).

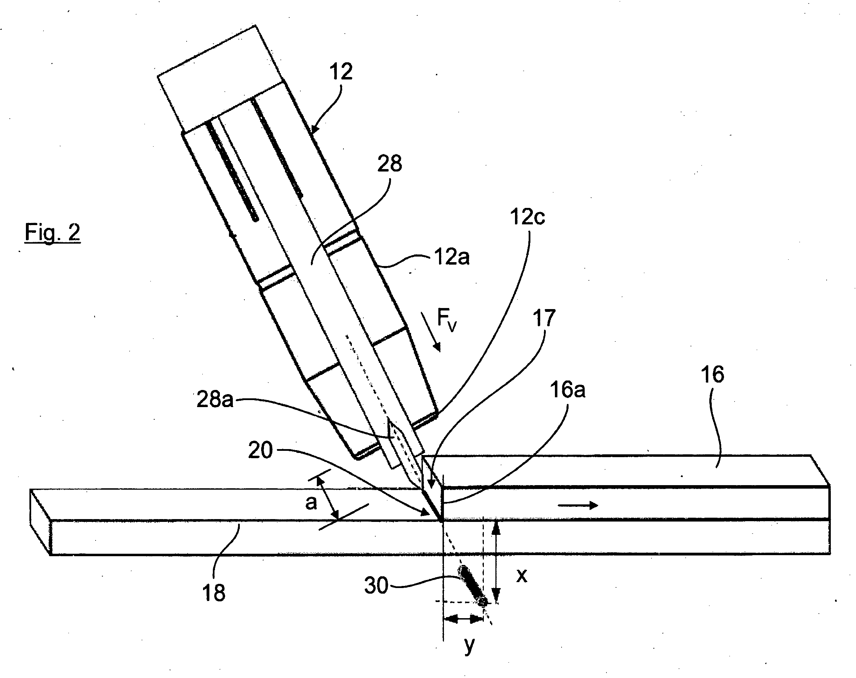

Die Bauteile können zum Beispiel dünnwandige Karosseriebleche 16, 18 (vergleiche auch Fig. 2) von Kraftfahrzeugen sein, die mittels einer an der Bauteilkontur (hier Blechkante 16a) entlanggeführten Schweißnaht 20 fest miteinander verbunden werden. Die Bauteilkontur kann auch anderweitig ausgeführt sein, zum Beispiel mit konkav oder konvex ausgeführten Geometrien.

Die Führung des Schweißbrenners 12 erfolgt in bekannter Weise robotergesteuert, wobei die erforderlichen Koordinaten in der Prozesssteuerung entsprechend vorgegeben sind (zum Beispiel nach dem Teach-in-Prinzip oder durch Steuerprogramme). Berücksichtigt sind dabei aber nicht Maßabweichungen bzw. Toleranzen sowohl in den Bauteilpositionierungen (zum Beispiel einem Förderband) als auch in den Bauteilen 16, 18 an sich.

Um dies auszugleichen, ist eine Aufspanneinrichtung 21 bereitgestellt, die einen am Roboterarm 14 befestigten Aufspannflansch 22 und ein den Schweißbrenner 12 tragendes Halteteil 24 aufweist. Das Halteteil 24 ist über einen darin integrierten Kreuzschlitten 26 (in der Fig. 1 nur prinzipiell angedeutet) in einer Aufspannebene in X- und Y-Richtung (Fig. 2) federnd nachgiebig innerhalb des Aufspannflansches 22 angeordnet.

Des Weiteren ist am Brennerkopf 12a des Schweißbrenners 12 ein Führungsarm 28 (Fig. 1 und 2) befestigt, der an seinem freien Ende zumindest eine Rolle 28a und/oder einen Taster (oder mehrere Rollen oder Taster, je nach Bauteilkontur) aufweist, der mit einer Vorspannkraft Fv (Fig. 2) federnd nachgiebig gegen einen Fügeabschnitt 17 (Fig. 2) zwischen den beiden Bauteilen 16, 18 gedrückt ist.

Der Führungsarm 28 mit zum Beispiel der Rolle 28a ist so eingestellt, dass bei dessen Anliegen an der Bauteilkontur bzw. Bauteilkante 16a ein definierter Abstand a (Fig. 2) zwischen der Brennerkopf-Spitze 12c und dem Fügebereich 17 gegeben ist, der eine präzise Schweißnaht 20 zu den Bauteilen 16, 18 sicherstellt.

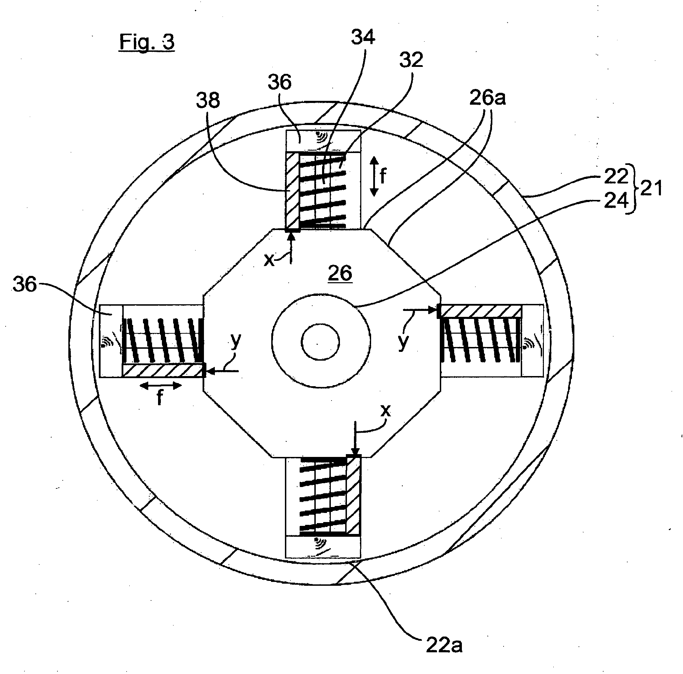

Weichen die räumlichen Gegebenheiten am Fügebereich 17 zwischen den beiden Bauteilen 16, 18 aufgrund von ungünstig zusammentreffenden Toleranzen oder anderweitig von der robotergesteuerten Bewegung des Schweißbrenners 12 geringfügig ab, so wird die Position des Brennerkopfes 12a relativ zur Bauteilkontur 16a über den Führungsarm 28 im Bereich der federnden Nachgiebigkeit nachgeführt. Mittels dieser federnden Nachgiebigkeit wird ausgehend von der in der Fig. 3 gezeigten zentrischen Lage des Kreuzschlittens 26 ein Federweg f bereitgestellt, über den der Schweißbrenner 12 und der daran befestigte Führungsarm 28 federnd nachgiebig verstellbar ist.

Diese Nachführung zeigt beispielsweise die Fig. 2 mit dem eingezeichneten Kräfteparallelogramm mit einer angenommenen, übertrieben dargestellten Roboterbahn 30, bei der der erforderliche Abstand vom Brennerkopf 12a des Schweißbrenners 12 zur Herstellung der korrekten Schweißnaht 20 nicht gegeben wäre.

Durch die federnde Nachgiebigkeit der Aufspanneinrichtung 21 über den Kreuzschlitten 26 (vergleiche nachstehende Beschreibung) wird der Brennerkopf 12a in X-/Y-Richtung gemäß den eingezeichneten Pfeilen in die korrekte Position nachgeführt und eine zuverlässig feste Schweißverbindung sichergestellt.

Die Fig. 3 zeigt dazu skizzenhaft den in dem Aufspannflansch 22 axial geführten, in X- und Y-Richtung federnd nachgiebigen Kreuzschlitten 26, der über beispielhaft vier in dem Aufspannflansch 22 angeordnete Schraubendruckfedern 32 gleicher Geometrie und Vorspannkraft in einer zentrischen Mittellage gehalten ist.

Die Federn 32 sind dabei exemplarisch in jeweils 90° zueinander versetzte Bohrungen 22a im Aufspannflansch 22 abgestützt und wirken gegensinnig auf Anlageflächen 26a des Kreuzschlittens 26.

Im Hinblick auf eine einwandfreie Nachführung ist es von besonderer Relevanz, dass die Federelemente 32 so ausgelegt sind, dass der Führungsarm 28 des Schweißbrenners 12 mit der Vorspannkraft Fv federnd nachgiebig vorgespannt ist. Dadurch ist unabhängig von der Beschaffenheit einer Störkontur am Fügebereich 17 (d.h. konvexe oder konkave Ausformung am Fügebereich 17) stets eine Druckanlage des Führungsarms 28 am Fügebereich gewährleistet, und zwar unter Aufbau oder unter Abbau der Vorspannkraft Fv. Zudem ist das, die Gewichtskraft des Kreuzschlittens 26 tragende Federelement 32 mit entsprechend stärkerer Federkraft ausgelegt als die anderen Federelemente 32, die nicht mit der Gewichtskraft des Kreuzschlittens 26 beaufschlagt ist.

Bei einer der Fig. 2 entsprechenden Auslenkung des Schweißbrenners 12 zur Einhaltung eines präzisen Abstandes a (Fig. 2) des Brennerkopfs 12a zur Bauteilkontur 16a ändert sich abweichend zur Fig. 3 die Position des Kreuzschlittens 26 relativ zum Aufspannflansch 22.

Beispielsweise sind zwei der Federn 32 in X- und Y-Richtung komprimiert, die zwei gegenüberliegenden hingegen dekomprimiert. Die Federn 32 sind aber so konzipiert, dass auch in einer maximal ausgelenkten Stellung des Schweißbrenners 12 eine noch stabile Halterung des Kreuzschlittens 26 zwischen den Federn 32 gegeben ist.

In den Bohrungen 22a des Aufspannflansches 22 (Fig. 3) sind jeweils an den Auflageflächen 26a des Kreuzschlittens 26 anliegende Stifte 34 von radial außen positionierten Sensoren 36 vorgesehen, die zusätzlich die Funktion einer Abschaltdose (Crashbox) ermöglichen.

Wird der Kreuzschlitten 26 bzw. der Schweißbrenner 12 aufgrund einer Fehlsteuerung oder eines Hindernisses über die konstruktiv vorgegebene, maximale Nachgiebigkeit in X-/Y-Richtung ausgelenkt, so wird über einen oder mehrere der Sensoren 36 in die Robotersteuerung eingegriffen bzw. der Roboter abgeschaltet.

Des Weiteren können im Bereich des Kreuzschlittens 26 (Fig. 3) Anzeigemittel 38 zum Beispiel in Form von Farbmarkierungen vorgesehen sein, die eine visuelle Kontrolle der momentanen Auslenkung des Schweißbrenners 12 ermöglichen. Dazu können beispielsweise am Aufspannflansch 22 entsprechende Sichtfenster (nicht dargestellt) vorgesehen sein.

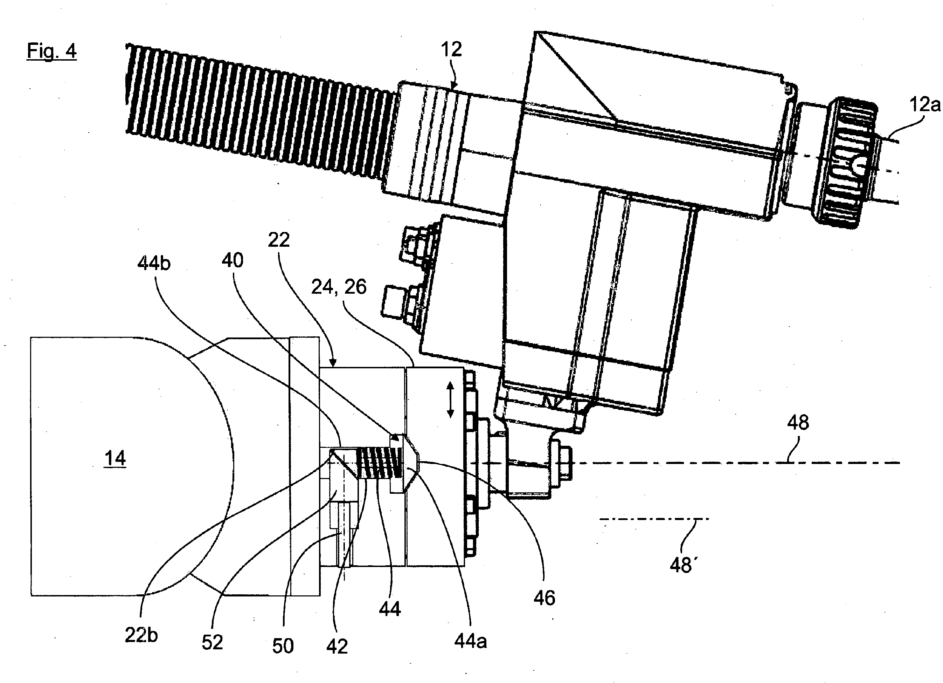

Die Fig. 4 schließlich zeigt vereinfacht eine zwischen dem Aufspannflansch 22 und dem Halteteil 24 bzw. dem Kreuzschlitten 26 angeordnete Zentriereinrichtung 40, die sich aus einem über eine Feder 42 vorgespannten Stift 44 mit einem kegelförmigen Kopf 44a zusammensetzt, wobei der Kopf 44a in eine korrespondierende, zentrische Ausnehmung 46 des Kreuzschlittens 26 oder des Halteteils 24 einragt bzw. aus dieser ausfahren kann.

Der Stift 44 mit dem Kopf 44a und die Ausnehmung 46 liegen in der dargestellten zentrierten Stellung in der Rotationsachse 48 des Roboterarms 14 und bilden den TCP der Aufspannung des Schweißbrenners 12 bzw. die exakte Mittelstellung des Kreuzschlittens 26. Zudem ist in der Fig. 4 eine Rotationsachse 48' des in einer ausgelenkten Stellung befindlichen Roboterarms 14 angedeutet.

Der in einer zentrischen Bohrung 22b des Aufspannflansches 22 geführte Stift 44 kann in seiner Federvorspannung über einen Querstift 50 verstellt oder in der Zentrierstellung blockiert werden. Dabei trägt der nur teilweise dargestellte Querstift 50 einen Keil 52, dessen Schrägfläche mit einer korrespondierenden Schrägfläche eines den Stift 44 führenden und die Feder 42 abstützenden Keils 44b zusammenwirkt.

Durch Verstellen des Querstifts 50 zum Beispiel mittels einer nicht dargestellten Schraubverbindung radial nach innen kann die Federvorspannung des Zentrierstifts 44 mit dem Kopf 44a erhöht oder gegebenenfalls der Kopf 44a sogar in der Ausnehmung 46 blockiert werden.

Die Zentriereinrichtung 40 ist so ausgebildet, dass sie den TCP bzw. die Ausgangsstellung des Schweißbrenners 12 vor dem Schweißvorgang sicherstellt, bei einer Nachführung des Schweißbrenners 12 über den Führungsarm 28 aber eine Auslenkung wie vorbeschrieben zulässt. Der Kegelwinkel des Kopfes 44a der Zentriereinrichtung 40 und dessen Federvorspannung ist dementsprechend ausgelegt.

In den Figuren ist der Führungsarm 28 starr ausgeführt. Anstelle dessen kann der Führungsarm 28 auch in seiner Längserstreckung und/oder quer dazu verstellbar sein, um zum Beispiel den Abstand a zwischen dem Brennerkopf 12c und dem Fügebereich 17 zu variieren.

## Patentansprüche

1. Vorrichtung zum Schweißen von Bauteilen (16, 18), wobei ein Fügewerkzeug (12) in Form eines Schweißbrenners über eine Aufspanneinrichtung (21) an einem Roboterarm (14) eines Industrieroboters angeordnet und gesteuert über den Roboter eine Fügebearbeitung in Form einer definierten Schweißnaht (20) entlang einem vorgegebenen Fügebereich (17) zwischen den Bauteilen (16, 18) aufbringt, wobei die Vorrichtung eine federnd nachgiebige Halterung (26) aufweist, mittels der das Fügewerkzeug (12) begrenzt federnd nachgiebig in der Aufspanneinrichtung (21) gehalten ist, und wobei die Aufspanneinrichtung (21) einen am Roboterarm (14) befestigten Aufspannflansch (22) und ein den Schweißbrenner (12) tragendes Halteteil (24) aufweist, **dadurch gekennzeichnet, dass** das federnd nachgiebige Halteteil der Aufspanneinrichtung (21) einen integrierten Kreuzschlitten (26) aufweist, der über Federelemente (32) gehalten ist, die in dem fest mit dem Roboterarm (14) verbundenen Aufspannflansch (22) angeordnet sind und dass die Vorrichtung ein Führungsmittel (28) aufweist, das beim Fügevorgang an einer Bauteilkontur (16a) anliegt und das Fügewerkzeug (12) in einer definierten Position zum Fügebereich (17) führt.

2. Vorrichtung nach Anspruch 1, **dadurch gekennzeichnet, dass** das Führungsmittel ein am Werkzeugkopf (12a), insbesondere am Brennerkopf, befestigter Führungsarm (28) ist, der mit einer Vorspannkraft (F_{V}) federnd nachgiebig gegen den Fügebereich (17) gedrückt ist, und dass insbesondere an dessen dem Bauteil (16, 18) zugewandten Ende zumindest eine Rolle (28a) und/oder ein Taster vorgesehen ist.

3. Vorrichtung nach Anspruch 1 oder 2, **dadurch gekennzeichnet, dass** in der Aufspanneinrichtung (21) eine von der federnd nachgiebigen Halterung (26) unabhängige Zentriereinrichtung (40) angeordnet ist, die die Aufspanneinrichtung (21) in einer definierten Mittelstellung (48) relativ zum Roboterarm (14) fixiert.

4. Vorrichtung nach Anspruch 3, **dadurch gekennzeichnet, dass** die Zentriereinrichtung (40) durch einen in der Drehachse (48) des Roboterarms (14) liegenden, federbeaufschlagten Stift (44) mit einem kegelförmigen Kopf (44a) gebildet ist, der in eine korrespondierende Ausnehmung (46) des federnd nachgiebigen Halteteils der Aufspanneinrichtung (21) einragt.

5. Vorrichtung nach Anspruch 4, **dadurch gekennzeichnet, dass** der Stift (44) über eine Spannvorrichtung (50, 52) mit keilförmigen Flächen in seiner die Zentrierung bewirkenden Federvorspannung verstellbar und/oder in der Zentrierstellung blockierbar ist.

6. Vorrichtung nach einem der vorhergehenden Ansprüche, **dadurch gekennzeichnet, dass** die Federelemente (32) in zwei vertikal zueinander liegenden Ebenen ausgerichtet sind.

7. Vorrichtung nacheinem der vorhergehenden Ansprüche, **dadurch gekennzeichnet, dass** die Federelemente Schraubendruckfedern (32) sind, die im Aufspannflansch (22) angeordnet sind und/oder mit einer definierten Vorspannkraft (Fv) auf Anlageflächen (26a) des dazwischen befindlichen Kreuzschlittens (26) wirken.

8. Vorrichtung nach einem der vorhergehenden Ansprüche, **dadurch gekennzeichnet, dass** am Kreuzschlitten (26) Anzeigemittel (38) vorgesehen sind, die den Federweg (f) der einzelnen Federelemente (32) zur Bestimmung der über das Führungsmittel (28) bewirkten Nachführung des Schweißbrenners (12) anzeigen.

9. Vorrichtung nach Anspruch 8, **dadurch gekennzeichnet, dass** die Anzeigen visuell durch eingefärbte Bereiche an den Anzeigemitteln (38) ausgeführt sind.

10. Vorrichtung nach einem der vorhergehenden Ansprüche, **dadurch gekennzeichnet, dass** in dem Aufspannflansch (22) mit dem Kreuzschlitten (26) gekoppelte Sensoren (36) angeordnet sind, die bei einem unzulässigen Ausschlag des Fügewerkzeugs (12), insbesondere des Schweißbrenners, bzw. des federnd nachgiebigen Halteteils (24) der Aufspanneinrichtung (21) in die Robotersteuerung eingreifen bzw. den Fügevorgang unterbrechen.

11. Vorrichtung nach Anspruch 10, **dadurch gekennzeichnet, dass** in dem Aufspannflansch (22) an jedem der Federelemente (32) ein Sensor (36) angeordnet ist, der bei einem zu großen Ausschlag des federnd nachgiebigen Halteteils (24) der Aufspanneinrichtung (21) bzw. des Fügewerkzeugs (12) die Robotersteuerung entsprechend abbricht.

## Claims

1. Device for the welding of components (16, 18), whereby a joining tool (12) in the form of a welding torch arranged and controlled by way of a mounting device (21) on a robotic arm (14) of an industrial robot applies join processing, by way of the robot, in the form of a defined weld seam (20) along a predetermined joining area (17) between the components (16, 18), whereby the device has a resiliently compliant holder (26), by means of which the joining tool (12) is held to a limited extent resiliently compliantly in the mounting device (21), and whereby the mounting device (21) has a mounting flange (22) fastened to the robotic arm (14) and a holding part (24) that carries the welding torch (12), **characterised in that** the resiliently compliant holding part (24) of the mounting device (21) has an integral cross-slide (26), which is held by way of spring elements (32), which are arranged in the mounting flange (22) that is tightly connected with the robotic arm (14), and that the device has a guide means (28), which, during a joining operation, lies against a component contour (16a) and guides the joining tool (12) in a defined position to the joining area (17).

2. Device according to claim 1, **characterised in that** the guide means is a guide arm (28) fastened on the tool head (12a), more particularly on the torch head, that is pressed resiliently compliantly against the joining area (17) with a preload force (Fv), and that more particularly at least a roller (28a) and/or a feeler is provided on its end facing the component (16, 18).

3. Device according to claim 1 or 2, **characterised in that** a centring device (40) independent of the resiliently compliant holder (26) is arranged in the mounting device (21) and fixes the mounting device (21) in a defined centre position (48) relative to the robotic arm (14).

4. Device according to claim 3, **characterised in that** the centring device (40) is formed by a spring-loaded pin (44) with a conical head (44a), said pin lying in the axis of rotation (48) of the robotic arm (14) and protruding into a corresponding recess (46) in the resiliently compliant holding part of the mounting device (21).

5. Device according to claim 4, **characterised in that,** by way of a tensioning device (50, 52) with wedge-shaped surfaces, the pin (44) can be adjusted in respect of its spring preload that brings about centring and/or can be locked in the centring position.

6. Device according to any one of the preceding claims, **characterised in that** the spring elements (32) are orientated in two planes lying vertical to each other.

7. Device according to any one of the preceding claims, **characterised in that** the spring elements are helical compression springs (32), which are arranged in the mounting flange (22) and/or act with a defined preload force (Fv) on contact surfaces (26a) of the cross-slide (26) located in between.

8. Device according to any one of the preceding claims, **characterised in that** display means (38) are provided on the cross-slide (26) and said display means show the spring travel (f) of the individual spring elements (32), to determine the tracking of the welding torch (12) brought about by way of the guide means (28).

9. Device according to claim 8, **characterised in that** the displays are embodied visually by means of coloured areas on the display means (38).

10. Device according to any one of the preceding claims, **characterised in that** sensors (36) coupled with the cross-slide (26) are arranged in the mounting flange (22) and, in the event of an unacceptable deflection of the joining tool (12), more particularly of the welding torch, or of the resiliently compliant holding part (24) of the mounting \ device (21), said sensors intervene in the robot control system and interrupt the welding operation.

11. Device according to claim 10, **characterised in that** on each of the spring elements (32) in the mounting flange (22) there is arranged a sensor (36), which in the event of an excessively large deflection of the resiliently compliant holding part (24) of the mounting device (21) or of the joining tool (12) stops the robot control system accordingly.

## Revendications

1. Dispositif de soudage de composants (16, 18), dans lequel un outil d'assemblage (12) sous la forme d'un chalumeau de soudage est disposé par le biais d'un dispositif de serrage (21) sur un bras de robot (14) d'un robot industriel et réalise de manière commandée par le biais du robot un usinage d'assemblage sous la forme d'un cordon de soudure (20) défini le long d'une zone d'assemblage (17) prescrite entre les composants (16, 18), dans lequel le dispositif présente un support (26) flexible élastiquement au moyen duquel l'outil d'assemblage (12) est maintenu par limitation de manière flexible élastiquement dans le dispositif de serrage (21), et dans lequel le dispositif de serrage (21) présente une bride de serrage (22) fixée au bras de robot (14) et une partie de retenue (24) portant le chalumeau de soudage (12), **caractérisé en ce que** la partie de retenue (24) flexible élastiquement du dispositif de serrage (21) présente un chariot en croix (26) intégré qui est maintenu par le biais d'éléments formant ressort (32) qui sont disposés dans la bride de serrage (22) raccordée fixement au bras de robot (14) et que le dispositif présente un moyen de guidage (28) qui repose lors du processus d'assemblage contre un contour de composant (16a) et mène l'outil d'assemblage (12) dans une position définie à la zone d'assemblage (17).

2. Dispositif selon la revendication 1, **caractérisé en ce que** le moyen de guidage est un bras de guidage (28) fixé à la tête d'outil (12a) en particulier à la tête de chalumeau qui est pressé avec une force de précontrainte (Fᵥ) de manière flexible élastiquement contre la zone d'assemblage (17), et qu'en particulier à son extrémité tournée vers le composant (16, 18) au moins un rouleau (28a) et/ou un palpeur est prévu.

3. Dispositif selon la revendication 1 ou 2, **caractérisé en ce qu'**un dispositif de centrage (40) indépendant du support (26) flexible élastiquement est disposé dans le dispositif de serrage (21), lequel fixe le dispositif de serrage (21) dans une position médiane définie (48) par rapport au bras de robot (14).

4. Dispositif selon la revendication 3, **caractérisé en ce que** le dispositif de centrage (40) est formé par une tige (44) sollicitée par ressort, se trouvant dans l'axe de rotation (48) du bras de robot (14) avec une tête conique (44a) qui pénètre dans un évidement correspondant (46) de la partie de retenue flexible élastiquement du dispositif de serrage (21).

5. Dispositif selon la revendication 4, **caractérisé en ce que** la tige (44) peut être réglée par le biais d'un dispositif de serrage (50, 52) avec des surfaces cunéiformes dans sa précontrainte de ressort provoquant le centrage et/ou bloquée dans la position de centrage.

6. Dispositif selon l'une quelconque des revendications précédentes, **caractérisé en ce que** les éléments formant ressort (32) sont orientés dans deux plans se trouvant verticalement l'un par rapport à l'autre.

7. Dispositif selon l'une quelconque des revendications précédentes, **caractérisé en ce que** les éléments formant ressort sont des ressorts hélicoïdaux de pression (32) qui sont disposés dans la bride de serrage (22) et/ou agissent avec une force de précontrainte (Fᵥ) définie sur des surfaces d'appui (26a) du chariot en croix (26) se trouvant au milieu.

8. Dispositif selon l'une quelconque des revendications précédentes, **caractérisé en ce que** sur le chariot de croix (26) des moyens d'affichage (38) sont prévus, lesquels affichent la course de ressort (f) des éléments formant ressort (32) individuels pour la détermination de la poursuite provoquée par le biais du moyen de guidage (28) du chalumeau de soudage (12).

9. Dispositif selon la revendication 8, **caractérisé en ce que** les affichages sont réalisés visuellement par les zones colorées sur les moyens d'affichage (38).

10. Dispositif selon l'une quelconque des revendications précédentes, **caractérisé en ce que** dans la bride de serrage (22) sont prévus des capteurs (36) couplés au chariot en croix (26) qui viennent en prise en cas d'écartement non autorisé de l'outil d'assemblage (12), en particulier du chalumeau de soudage, ou de la partie de retenue (24) flexible élastiquement du dispositif de serrage (21) dans la commande de robot ou interrompent le processus d'assemblage.

11. Dispositif selon la revendication 10, **caractérisé en ce qu'**un capteur (36) est disposé dans la bride de serrage (22) sur chacun des éléments formant ressort (32), lequel interrompt de manière correspondante la commande de robot en cas d'écartement trop grand de la partie de retenue (24) flexible élastiquement du dispositif de serrage (21) ou de l'outil d'assemblage (12).
